# EUROPÄISCHE PATENTSCHRIFT

(11) **EP 2 807 558 B1**
(45) Veröffentlichungstag und Bekanntmachung des Hinweises auf die Patenterteilung: **02.09.2020**
(21) Anmeldenummer: 13702764.5
(22) Anmeldetag: 25.01.2013
(51) Int. Cl.: G06F 9/455, G06F 12/14, G06F 12/02

(54) **SPEICHERCONTROLLER ZUR BEREITSTELLUNG MEHRERER DEFINIERTER BEREICHE EINES MASSENSPEICHERMEDIUMS ALS UNABHÄNGIGE MASSENSPEICHER AN EINEN MASTER-BETRIEBSSYSTEM-KERN ZUR EXKLUSIVEN BEREITSTELLUNG AN VIRUTELLE MASCHINEN**
MEMORY CONTROLLER FOR PROVIDING A PLURALITY OF DEFINED AREAS OF A MASS STORAGE MEDIUM AS INDEPENDENT MASS MEMORIES TO A MASTER OPERATING SYSTEM CORE FOR EXCLUSIVE PROVISION TO VIRTUAL MACHINES
CONTRÔLEUR DE MÉMOIRE POUR LA FOURNITURE DE PLUSIEURS SECTEURS DÉFINIS D'UN SUPPORT D'ENREGISTREMENT DE MASSE EN TANT QUE MÉMOIRE DE MASSE INDÉPENDANTE SUR UN NOYAU DU SYSTÈME D'EXPLOITATION MAÎTRE EN VUE DE LA FOURNITURE EXCLUSIVE À DES MACHINES VIRTUELLES

(30) Priorität: 27.01.2012 DE 102012201225
(43) Veröffentlichungstag der Anmeldung: 03.12.2014
(73) Patentinhaber: Continental Automotive GmbH, 30165 Hannover (DE)
(72) Erfinder: BECKER, Bernd, 89134 Blaustein (DE); FINKE, Thorsten, 35630 Ehringshausen (DE)
(86) Internationale Anmeldenummer: PCT/EP2013/051390
(87) Internationale Veröffentlichungsnummer: WO 2013/110736

(56) Entgegenhaltungen:
- Innotek Gmbh: "innotek VirtualBox User Manual, Version 1.5.6", , 19. Februar 2008 (2008-02-19), Seiten 1-182, XP055059670, Gefunden im Internet: URL:http://downloads.bosslinux.in/VIRTUALI ZATION/UserManual.pdf [gefunden am 2013-04-15]

## Beschreibung

Die Erfindung betrifft ein Rechnersystem, welches beispielsweise in einem Kraftfahrzeug oder als eingebettetes System eingesetzt werden kann.

In modernen Rechnersystemen wird vielfach mit der Virtualisierung von Betriebssystemen gearbeitet, um beispielsweise auf den Einsatz zusätzlicher Prozessoren oder Mikrocontroller zu verzichten. Aus Sicherheitsgründen wird hierbei versucht, den gegenseitigen Zugriff der virtualisierten Betriebssysteme untereinander zu verhindern. Zudem soll insbesondere der Zugriff von Schadprogrammen auf die verschiedenen virtualisierten Betriebssysteme unterbunden werden. Wenn bei mehreren virtualisierten Betriebssystemen jeweilige Massenspeicher auf demselben physikalischen Massenspeichermedium abgelegt sind, besteht bei herkömmlichen Rechnersystemen grundsätzlich die Gefahr, dass beispielsweise durch Ausnutzung von Sicherheitslücken unerwünschter Zugriff auf fremde Massenspeicher erfolgt. Dies wird bei herkömmlichen Systemen dadurch umgangen, dass für jedes virtuelle Betriebssystem ein eigener physikalischer Massenspeicher zur Verfügung gestellt wird.

Aus der Druckschrift Innotek GmbH: "innotek VirtualBox User Manual, Version 1.5.6", 19. Februar 2008 (2008-02-19), Seiten 1-182, XP055059670, Gefunden im Internet URL http://downloads.bosslinux.in/ VIRTUALIZATION/UserManual.pdf [gefunden am 2013-04-15] sind verschiedene Möglichkeiten zur sicheren Nutzung von Massenspeichern durch mehrere virtualisierte Betriebssysteme bekannt.

Eine zu lösende Aufgabe besteht darin, ein verbessertes Konzept für die Sicherheit von virtualisierten Betriebssystemen anzugeben.

Die Aufgabe wird gelöst mit dem Gegenstand des unabhängigen Patentanspruchs. Weiterbildungen und Ausgestaltungen der Erfindung sind Gegenstand der abhängigen Ansprüche.

Das vorgeschlagene Konzept basiert auf der Idee, für ein Rechnersystem einen speziellen Speichercontroller für ein nichtflüchtiges Massenspeichermedium zur Verfügung zu stellen, welcher einen Zugriff auf definierte Bereiche des Massenspeichermediums jeweils als unabhängigen Massenspeicher ermöglicht, so dass jeweils mindestens einer der unabhängigen Massenspeicher für jeweils ein virtualisiertes Betriebssystem zur Verfügung gestellt wird. Der Speichercontroller ist vorzugsweise als Hardwarebauteil realisiert, welches unabhängig von einem Prozessor des Rechnersystems ist, auf dem die virtualisierten Betriebssysteme ablaufen. Somit kann sichergestellt werden, dass die virtualisierten Betriebssysteme jeweils nur auf die ihnen zugewiesenen Massenspeicher Zugriff haben können.

Die erfindungsgemäße Ausführungsform ist im unabhängigen Patentanspruch 1 definiert.

Das Massenspeichermedium ist beispielsweise ein sogenannter Flash-Speicher wie eine Mulitmediacard, MMC, oder eine Secure Digital Memory Card, SD-Card, oder dergleichen. Beispielsweise ist das nichtflüchtige Massenspeichermedium ein NAND-Speicher, ein NOR-Speicher oder ein gemanagter NAND-Speicher, welche jeweils fest auf der Platine des Rechnersystems gelötet sein können.

In anderen Ausführungsformen kann das Massenspeichermedium auch eine Festplatte oder ein Festkörperlaufwerk, englisch: solid state drive, SSD, sein. In verschiedenen Ausführungsformen ist das Massenspeichermedium von dem Rechnersystem umfasst und beispielsweise fest in dem Rechnersystem integriert.

Der Speichercontroller stellt somit dem Master-Betriebssystem-Kern mehrere Massenspeicher zur Verfügung, welche unter Kontrolle des Master-Betriebssystem-Kerns als jeweilige Massenspeicher für den ersten und den wenigstens einen zweiten Betriebssystemkern zur Verfügung gestellt werden. Dadurch kann jeweils ein geschützter Zugriff auf die definierten Bereiche des Massenspeichermediums erfolgen.

In einer Ausführungsform weist der Speichercontroller eine Abbildungstabelle auf, der für jeden zur Verfügung gestellten Massenspeicher eine Abbildungsvorschrift auf die zugehörigen definierten Bereiche des Massenspeichermediums gespeichert hat. Dadurch können die Betriebssystemkerne den jeweils zur Verfügung gestellten Massenspeicher wie einen herkömmlichen Massenspeicher verwenden, wobei eine Umsetzung beziehungsweise Abbildung der Zugriffsanforderungen der Betriebssystemkerne unter Nutzung der Abbildungstabelle beziehungsweise der Abbildungsvorschriften erfolgt.

Beispielsweise sind die definierten Bereiche des Massenspeichermediums durch Partitionen auf dem Massenspeichermedium gebildet, wobei die gespeicherten Abbildungsvorschriften Informationen über eine Position und Größe der Partitionen umfassen.

Dadurch wird es möglich, dass die Betriebssystemkerne auf die zugeordneten Massenspeicher über jeweils virtuelle Blocknummern auf die definierten Bereiche zugreifen, wobei die derart definierten virtuellen Blocknummern durch die Abbildungsvorschriften auf die physikalischen Blocknummern des Massenspeichermediums abgebildet werden. Durch die Größeninformation der Partitionen in der Abbildungstabelle kann auch gewährleistet werden, dass jeweils nur auf die definierten Bereiche beziehungsweise Partitionen durch den Betriebssystemkern zugegriffen wird. Beispielsweise wird verhindert, dass bei einer zu großen virtuellen Blocknummer ein Zugriff auf einen nicht vom definierten Bereich umfassten physikalischen Bereich des Massenspeichermediums erfolgt.

Vorzugsweise weist der Speichercontroller einen Master-Controller auf, der eingerichtet ist, einen Hardwarezugriff auf die definierten Bereiche zu steuern. Insbesondere ist der Master-Controller beispielsweise eingerichtet, eine jeweilige Zugriffsberechtigung auf die definierten Bereiche zu prüfen. Eine solche Zugriffsberechtigung kann unter anderem über die in der Abbildungstabelle gespeicherten Informationen, beispielsweise die Positions- und Größeninformationen, realisiert werden.

In verschiedenen Ausführungsformen umfassen die gespeicherten Abbildungsvorschriften auch Informationen über eine Hardware-Identifikationsnummer der jeweiligen Massenspeicher. Diese Hardware-Identifikationsnummer kann beispielsweise von den Betriebssystemkernen beziehungsweise deren Treibern zur Ansteuerung der Massenspeicher verwendet werden.

In der erfindungsgemäßen Ausführungsform laut Patentanspruch 1 weist der Speichercontroller einen ersten und wenigstens einen zweiten virtuellen Controller auf, die jeweils einen der Massenspeicher zur Verfügung stellen und jeweils ein Register aufweisen, das in einen Speicherbereich des Master-Betriebssystem-Kerns abgebildet ist. Damit kann jedem vom Master-Betriebssystem-Kern gesteuerten Betriebssystemkern zumindest ein virtueller Controller zur Verfügung gestellt werden, welcher innerhalb des Adressbereichs des Betriebsystemkerns unmittelbar angesteuert werden kann. Insbesondere erfolgt die Ansteuerung der Massenspeicher für die kontrollierten Betriebssystemkerne völlig transparent und ohne Kenntnis über die jeweils anderen virtuellen Controller beziehungsweise Massenspeicher.

Vorzugsweise ist der Speichercontroller als Hardwarebaustein realisiert, etwa als applikationsspezifischer integrierter Schaltkreis, ASIC, oder über einen Mikrocontroller mit entsprechender Programmierung. Programmdaten für einen solchen Mikrocontroller können beispielsweise in einem Bereich des Massenspeichermediums abgelegt sein.

Durch die Implementierung des Speichercontrollers als Hardwarebaustein wird die Rechenbelastung des Prozessors des Rechnersystems reduziert. Zudem ist durch die Trennung in verschiedene Hardwarebausteine zwischen Prozessor und Speichercontroller eine erhöhte Sicherheit gegenüber Manipulationen des Speichercontrollers durch Schadprogramme, die auf dem Prozessor ablaufen, gegeben.

Die virtuellen Controller leiten ihre Anfragen zum Zugriff auf die definierten Bereiche beispielsweise an den Master-Controller weiter, welcher den physikalischen Zugriff auf das Massenspeichermedium steuert. Vorzugsweise geschieht diese Steuerung auf Basis der Informationen, die in der Abbildungstabelle gespeichert sind. Eine Initialisierung und Steuerung des Master-Controllers kann beispielsweise durch den Master-Betriebssystem-Kern erfolgen.

In weiteren Ausführungsformen ist der Speichercontroller zudem eingerichtet, einen Zugriff auf die definierten Bereiche des Massenspeichermediums anhand vorgegebener Prioritäten zu steuern. Eine solche Steuerung erfolgt beispielsweise wiederum durch den Master-Controller, wobei die vorgegebenen Prioritäten beispielsweise ebenfalls in der Abbildungstabelle gespeichert sind.

In weiteren Ausführungsformen ist der Speichercontroller beziehungsweise der Master-Controller eingerichtet, eine Nutzungsverteilung des Massenspeichermediums zu steuern. Hierbei werden sogenannte Wear-Leveling-Mechanismen eingesetzt, die eine gleichmäßige Nutzung beziehungsweise Abnutzung von Speicherbereichen beziehungsweise Speicherzellen des Massenspeichermediums gewährleisten. Dadurch kann die Rechenbelastung des Prozessors des Rechnersystems weiter reduziert werden.

Die Erfindung wird nachfolgend an mehreren Ausführungsbeispielen anhand von Figuren näher erläutert. Gleiche Bezugszeichen kennzeichnen hierbei Elemente der Bauteile gleicher Funktion. Soweit sich Elemente oder Bauteile in ihrer Funktion entsprechen, wird deren Beschreibung nicht in jeder der folgenden Figuren wiederholt. Es zeigen:
- Figur 1: eine schematische Darstellung eines Rechnersystem,
- Figur 2: eine schematische Darstellung einer Aufteilung eines Massenspeichermediums und
- Figur 3: eine schematische Darstellung eines weiteren Ausführungsbeispiels eines Rechnersystems.

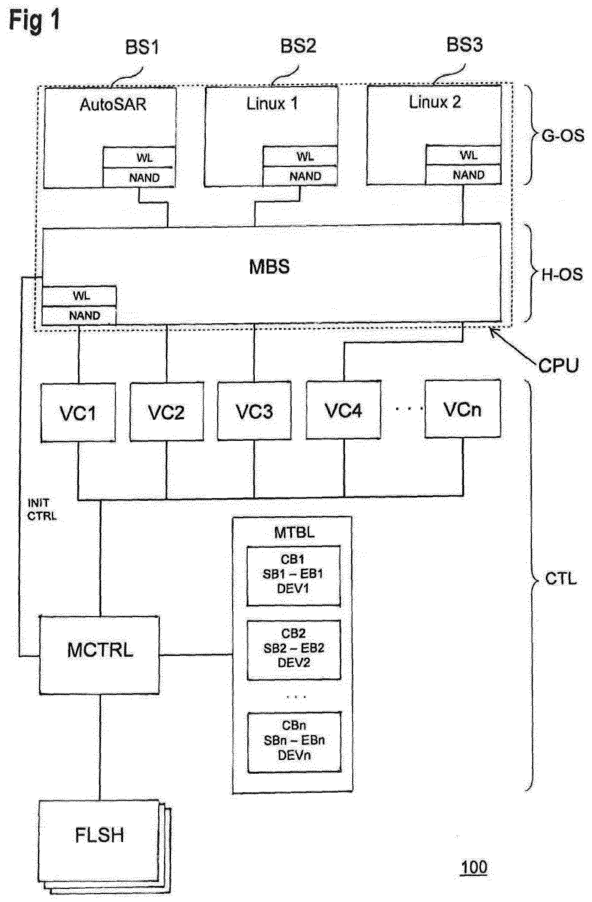

Figur 1 zeigt eine schematische Darstellung einer Ausführungsform eines Rechnersystems 100 mit einem Prozessor CPU und einem Speichercontroller CTL, an den ein Massenspeichermedium FLSH angeschlossen ist. Das Massenspeichermedium FLSH ist beispielsweise ein sogenannter Flash-Speicher wie eine Multimediacard, MMC, oder eine Secure Digital Memory Card, SD-Card, oder dergleichen. Beispielsweise ist das nichtflüchtige Massenspeichermedium FLSH ein NAND-Speicher, ein NOR-Speicher oder ein gemanagter NAND-Speicher, welche jeweils fest auf der Platine des Rechnersystems 100 verlötet sein können oder aber sich extern vom Rechnersystem 100 befinden. Das Massenspeichermedium FLSH kann auch ein Festkörperlaufwerk, englisch: solid state drive, SSD, sein.

Der Prozessor CPU dient bei der dargestellten Ausführungsform zur Ausführung eines Master-Betriebssystem-Kerns MBS als sogenanntes Wirt-Betriebssystem oder Host-Betriebssystem H-OS. Unter Kontrolle des Master-Betriebssystem-Kerns MBS werden in der vorliegenden Ausführungsform ein erster, ein zweiter und ein dritter Betriebssystemkern BS1, BS2, BS3 ausgeführt, welche sogenannte Gast-Betriebssysteme G-OS darstellen. Beispielsweise ist der erste Betriebssystemkern BS1 für ein Betriebssystem gemäß der Automotive Open System Architecture, AUTOSAR, ausgebildet, während auf dem zweiten und dritten Betriebssystemkern BS2, BS3 verschiedene Linux-Betriebssysteme ablaufen. Beispielsweise ist der zweite Betriebssystemkern BS2 ein herkömmliches Linux-Betriebssystem, welches auch die Ausführung von sicherheitskritischen Anwendungen oder Programmen zulässt, so dass insbesondere die Ausführung von Schadprogrammen nicht grundsätzlich verhindert werden kann. Der dritte Betriebssystemkern BS3 umfasst beispielsweise ein gesichertes beziehungsweise gehärtetes Linux-System, welches beispielsweise mit Sicherheitsrichtlinien betrieben wird und die Ausführung sicherheitskritischer Anwendungen unterbindet. Beispielsweise erfolgt eine Verwaltung des ersten und/oder des zweiten Betriebssystemkerns BS1, BS2 beziehungsweise von deren Systemprogrammen durch dieses gesicherte Linux-System. Der Master-Betriebssystem-Kern MBS ist beispielsweise als Mikrokern oder Separationskern ausgeführt.

Der Speichercontroller CTL umfasst einen Master-Controller MCTRL sowie mehrere virtuelle Controller VC1, VC2, VC3, VC4, ..., VCn, die mit dem Master-Controller MCTRL verbunden sind. Ferner ist an den Master-Controller MCTRL das Massenspeichermedium FLSH angeschlossen. Der Speichercontroller CTL umfasst ferner eine Abbildungstabelle MTBL, in der für jeden der virtuellen Controller VC1 bis VCn eine Abbildungsvorschrift zwischen definierten Bereichen des Massenspeichermediums FLSH und dem zugehörigen virtuellen Controller gespeichert ist. Beispielsweise ist für den ersten virtuellen Controller VC1 ein Eintrag mit der Identifikation des Controllers CB1, einen Startblock SB1 auf dem Massenspeichermedium FLSH, einem Endblock EB1 auf dem Massenspeichermedium FLSH sowie einer Hardware-Identifikationsnummer DEV1 gespeichert, welche der virtuelle Controller VC1 dem angeschlossenen Prozessor CPU zur Verfügung stellt. In ähnlicher Weise sind auch für die anderen virtuellen Controller Einträge mit Controllerinformationen CB2 bis CBn, Startblöcken SB2 bis SBn, Endblöcken EB2 bis Ebn und Hardwareidentifikationsnummern DEV2 bis DEVn abgelegt.

Der Master-Controller MCTRL ist zudem über eine besondere Steuerleitung mit dem Prozessor CPU verbunden, welche insbesondere lediglich dem Master-Betriebssystem-Kern MBS eine Steuerung und Konfiguration des Master-Controllers MCTRL über Initialisierungsbefehle INIT und Steuerbefehle CTRL ermöglicht.

Der Speichercontroller CTL stellt somit dem Master-Betriebssystem-Kern eine Vielzahl von virtuellen Controllern VC1 bis VCn zur Verfügung, welche wiederum den abhängig kontrollierten Betriebssystemkernen BS1, BS2, BS3 als jeweilige Massenspeichercontroller zur Verfügung gestellt werden. Somit erhält jeder BetriebssystemKern BS1, BS2, BS3 zumindest einen eigenen virtuellen Controller, über den auf einen dem Betriebssystemkern zugeordneten Massenspeicher zugegriffen werden kann. Vorzugsweise ist der Speichercontroller CTL als separater Hardwarebaustein realisiert, so dass keine zusätzliche Prozessorleistung des Prozessors CPU genutzt werden braucht.

Die virtuellen Controller VC1 bis VCn weisen zumindest für die kontrollierten Betriebssystemkerne BS1, B2, B3 die Funktionalität eines üblichen Speichercontrollers auf, wobei durch die Abbildungstabelle virtuelle Blocknummern der virtuellen Controller VC1 bis VCn auf physikalische Blöcke des angeschlossenen Massenspeichermediums FLSH abgebildet werden. Beispielsweise wird diese Abbildung, englisch: mapping, dadurch realisiert, dass zu den Startblocks SB1, SB2, SBn, welche als Offset dienen, die virtuelle Blocknummer hinzu addiert wird. Neben den reinen Blocknummern kann es wünschenswert sein, dass auch die Chipselect-Leitungen auf die virtuellen Controller VC1 bis VCn abgebildet werden.

Während bei der dargestellten Form in der Abbildungstabelle physikalische Start- und Endblocks gespeichert sind, ist es auch möglich, neben den Startblocks SB1, SB2, SBn auch eine Partitionsgröße auf dem Massenspeichermedium FLSH in der Abbildungstabelle abzulegen, um die jeweils zulässige Größe beziehungsweise den zulässigen Zugriffsbereich für die virtuellen Controller zu definieren. In beiden Fällen ist es beispielsweise vorgesehen, dass der Master-Controller MCTRL bei einer Zugriffsanfrage der virtuellen Controller VC1 bis VCn in Richtung des Massenspeichermediums FLSH überprüft, ob der angeforderte Block innerhalb des durch die Einträge definierten Bereichs auf dem Massenspeichermedium liegt. Im Falle einer Bereichsverletzung, welche durch den Master-Controller MCTRL detektiert wird, kann beispielsweise eine Ausnahmemitteilung, englisch: exception, in Richtung des Prozessors CPU gesendet werden. Diese Ausnahmemitteilung ist beispielsweise ein Software-Interrupt, welcher dann von dem Master-Betriebssystem-Kern MBS verarbeitet wird.

Eine weitere wünschenswerte Information ist eine Information über das angeschlossene Massenspeichermedium. Dadurch kann der Master-Controller MCTRL erfahren, ob der physikalische Speicher beispielsweise über SDIO, MMC oder als reines NAND-Gerät angeschlossen ist. Diese Geräteinformation teilt dem Master-Controller MCTRL auch mit, welche Chipselect-Leitungen verwendet werden sollen, um auf das Massenspeichermedium zuzugreifen und auf welche Weise eine Adressierung des angeschlossenen Massenspeichergeräts erfolgt.

In verschiedenen Ausführungsformen können auch mehrere Massenspeichermedien angeschlossen werden, wobei in diesem Fall vorzugsweise mehrere Master-Controller vorgesehen werden, die jeweils den physikalischen Zugriff auf ein angeschlossenes Massenspeichermedium realisieren. Die Information über den Gerätetyp des jeweiligen Massenspeichermediums kann beispielsweise für eine Unterscheidung zwischen mehreren SD-Karten sinnvoll sein, die an speziellen SD-Karten-Controllern angeschlossen sind. Die verschiedenen definierten Bereiche für die Betriebssystemkerne BS1, BS2, BS3 können somit auf unterschiedlichen Massenspeichermedien abgelegt sein. Jedoch ist es vorzugsweise nicht vorgesehen, dass sich ein definierter Bereich über mehrere Massenspeichermedien erstreckt.

Eine Konfiguration des Massenspeichermediums FLSH durch den Master-Controller MCTRL erfolgt beispielsweise über die zuvor beschriebene Verbindung zwischen dem Master-Controller MCTRL und dem Master-Betriebssystem-Kern MBS. Diese Konfiguration wird vorzugsweise beim Starten des Master-Betriebssystem-Kerns vorgenommen, wobei die Konfigurationsdaten auch unmittelbar auf dem Massenspeichermedium FLSH, beispielsweise in einem Anfangsbereich beziehungsweise in den ersten Blocks des Massenspeichermediums FLSH abgelegt sind. Dabei ist der Master-Controller MCTRL vorzugsweise dazu eingerichtet, eine fehlerhafte Konfiguration, beispielsweise aufgrund von überlappenden Blockbereichen an den Master-Betriebssystem-Kern MBS beziehungsweise das Wirt-Betriebssystem H-OS mitzuteilen.

Jeder virtuelle Controller VC1 bis VCn ist vorzugsweise eine reale Hardwareinstanz mit eigenen Registern, die in separate Speicherseiten des physikalischen Adressbereichs des Prozessors CPU angebildet sind. Dadurch kann jeder virtuelle Controller zu einer separaten Partition für ein Gast-Betriebssystem zugewiesen werden, wobei Standard-Mechanismen des Rechnersystems verwendet werden, beispielsweise einer Speicherabbildungseinheit, englisch: memory mapping unit, MMU. Zusätzlich kann jeder virtuelle Controller VC1 bis VCn alle Register aufweisen, die notwendig sind um Lese- und Schreibzugriffe auf das virtuelle Gerät auszuführen, so dass sich jeder virtuelle Controller wie ein herkömmlicher Speichercontroller verhält. Ein Unterschied zu einem herkömmlichen Speichercontroller liegt unter anderem in der Tatsache begründet, dass die tatsächliche Datenübertragung im physikalischen Sinn durch den Master-Controller MCTRL ausgeführt wird, der die Konfiguration und die Abbildungstabelle gegen die Übertragungs- beziehungsweise Zugriffsparameter prüft, bevor die Übertragung tatsächlich ausgeführt wird.

Die Übertragungs- beziehungsweise Zugriffsparameter umfassen beispielsweise die Blocknummern, die Zahl von Blocks die gelesen oder geschrieben werden sollen oder Zugriffsberechtigungen. Dadurch verhalten sich die virtuellen Controller wie unabhängige Entitäten, welche Ausnahmemeldungen im Fall von Zugriffsverletzungen erzeugen. Nachdem der Master-Controller die Zugriffsparameter überprüft hat und somit der Zugriff innerhalb des definierten und erlaubten Bereichs liegt, wird die virtuelle Adresse des virtuellen Controllers in eine physikalische Adresse umgewandelt, welche in dem Massenspeichermedium FLSH verwendet wird.

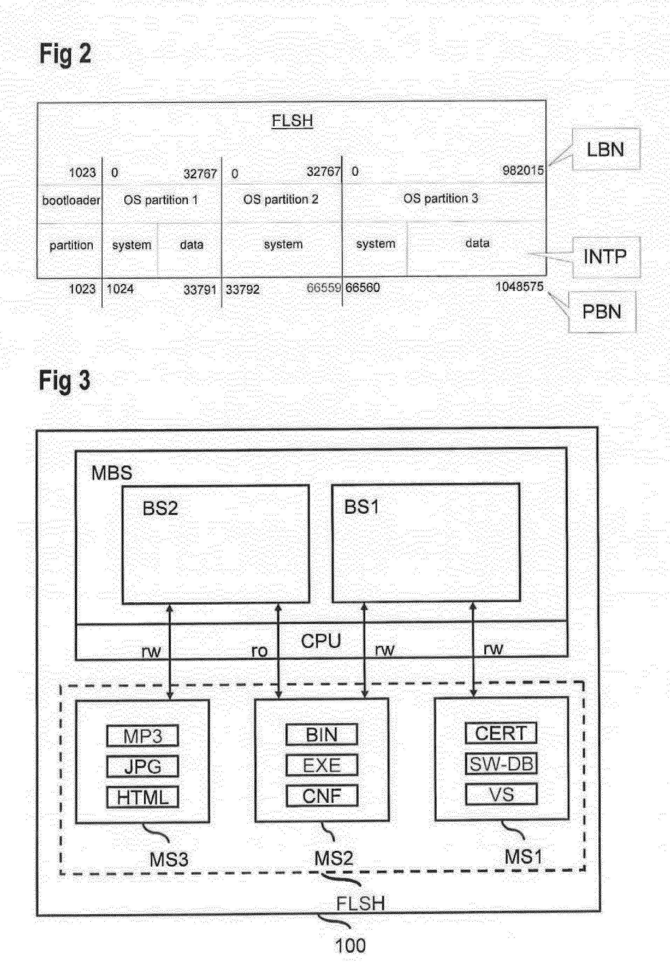

Figur 2 zeigt eine beispielhafte Aufteilung eines Massenspeichermediums FLSH in mehrere definierte Bereiche, auf die über die virtuellen Controller zugegriffen werden kann. Hierbei ist in dem dargestellten Ausführungsbeispiel das Massenspeichermedium FLSH in vier definierte Bereiche eingeteilt, welche durch physikalische Blocknummern PBN definiert sind. Beispielsweise geht der erste Bereich von einem physikalischen Block 0 bis zu einem physikalischen Block 1023, der zweite Bereich vom physikalischen Block 1024 bis zum physikalischen Block 33791, der dritte Bereich vom physikalischen Block 33792 bis zum physikalischen Block 66559, und der vierte Bereich vom physikalischen Block 66560 bis zum physikalischen Block 1048575. Der erste Bereich ist beispielsweise eine Partition für einen Bootloader bei einem Start des gesamten Rechnersystems. Der zweite Bereich ist eine erste Betriebssystempartition, welche für das zugehörige Betriebssystem in eine interne System- und eine interne Datenpartition aufgeteilt ist. Die Zeile mit den internen Datenpartitionen ist mit INTP gekennzeichnet. Der dritte Bereich dient als Systempartition für eine zweite Betriebssystempartition und der vierte Bereich ist wiederum in eine Systempartition und eine Datenpartition als interne Datenpartitionen einer dritten Betriebssystempartition aufgeteilt. Für die jeweiligen Bereiche ergeben sich logische Blocknummern LBN, die jeweils bei 0 beginnen und für den ersten Bereich bei Block 1023, für den zweiten Bereich bei Block 32767, für den dritten Bereich bei Block 32767, und für den vierten Bereich bei Block 982015 endet.

Die einzelnen Bereiche können auch als Superpartitionen bezeichnet werden. Dadurch sieht für jeden Betriebssystemkern die zugehörige Superpartition wie ein kompletter Massenspeicher aus. In diesem Bereich der Superpartition wird wiederum beispielsweise ein erster Block wie ein sogenannter Master-Boot-Record benutzt, was in ähnlicher Weise bei herkömmlichen PC-Systemen üblich ist. Beispielsweise wird in diesem Master-Boot-Record eine Partitionstabelle gespeichert, welche Informationen über die internen Partitionen INTP trägt.

Jeder Betriebssystemkern hat Zugriff auf seine zugehörige Superpartition und kann Zugriffsrechte auf die internen Partitionen INTP verwalten. Für die abhängig ausgeführten Betriebssystemkerne BS1, BS2, BS3 ist ein Zugriff auf eine interne Partition dennoch lediglich mit den Rechten möglich, welche ihm vom Master-Betriebssystem-Kern MBS zugewiesen werden. Dementsprechend kann ein Betriebssystemkern, der nur Lesezugriff auf die OS-Partition 2 hat, nur lesend auf den Speicher dieser Partition zugreifen. Dieser Betriebssystemkern kann dementsprechend auch keine eigenen Partitionen erzeugen oder Inhalte auf das Massenspeichermedium schreiben beziehungsweise schreiben lassen. In ähnlicher Weise kann es auch möglich sein, dass ein anderer Betriebssystemkern auf die Systempartition der OS-Partition 3 nur Lesezugriff auf, während auf die interne Datapartition der OS-Partition 3 Lese- und Schreibzugriffe möglich sind. Vorzugsweise wird jede Superpartition bei einem virtuellen Controller verwaltet. In verschiedenen Ausführungsformen ist es auch möglich, dass mehrere virtuelle Controller auf den gleichen physikalischen Bereich Zugriff haben, um einen physikalischen Bereich in gesicherter Weise auch mehreren Betriebssystemkernen zur Verfügung zu stellen. Beispielsweise wird hierbei für einen virtuellen Controller Schreib- und Lesezugriff auf die zugehörige Superpartition ermöglicht, während der oder die anderen virtuellen Controller lediglich Lesezugriffe auf diesen Bereich haben.

Ein Booten des Rechnersystems wird vorzugsweise immer von den ersten Blocks des angeschlossenen Massenspeichermediums FLSH durchgeführt. Nach einem Einschalten ist es wünschenswert, dass die Abbildungstabelle mit Nullen gefüllt wird, so dass alle virtuellen Controller den gesamten angeschlossenen Speicherbereich des Massenspeichermediums FLSH sehen. Dies ist in der Regel ohne Probleme möglich, da der Prozessor üblicherweise durch einen sogenannten Bootloader oder den Master-Betriebssystem-Kern mit einem sogenannten Bootstrapping-Prozess gestartet wird. Dieser Bootloader initialisiert vorzugsweise dann die Abbildungstabelle MTBL bevor die abhängig kontrollierten Betriebssystemkerne BS1, BS2, BS3 gestartet werden.

Hierfür sind unterschiedliche Möglichkeiten vorgesehen. Beispielsweise ist es möglich, dass ein Initialisierungscode die Start- und Endblocks explizit in die Abbildungstabelle NTBL einschreibt. Weiter ist es möglich, dass die Abbildungstabelle durch einen speziellen Block in dem Massenspeichermedium FLSH initialisiert wird. Der Initialisierungscode sorgt vorzugsweise auch dafür, dass ein Zugriff auf den Master-Controller MCTRL auf den Master-Betriebssystem-Kern MBS beschränkt ist. Zusätzlich initialisiert der Initialisierungscode vorzugsweise grundlegende MMU-Tabellen, so dass die virtuellen Controller im entsprechenden Master-Betriebssystem-Kern beziehungsweise den Gast-Betriebssystem-Kernen BS1, BS2, BS3 zugewiesen werden können.

In verschiedenen Ausführungsformen kann auch eine Interoperabilität mit einer Ein-/Ausgabe MMU vorgesehen werden, so dass zusätzlich Speicherbereichsidentifikationen, Übersetzungspuffer oder Verweise auf MMU-Übersetzungspuffer in ein Register des virtuellen Controllers geschrieben werden. Bei der Nutzung einer Ein-/Ausgabe MMU sollte diese in der Lage sein, Unterbrechungsanforderungen der virtuellen Controller abzubilden und abzufangen. Der Master-Controller regt hierbei vorzugsweise die Unterbrechungsanforderungen für die virtuellen Controller an, für die eine zugrundeliegende Übertragung ausgeführt wurde. Die Ein-/Ausgabe MMU benötigt hierfür eine Zuordnung mit Speicherbereichen, zum Beispiel eine Gastpartition oder den Master-Betriebssystem-Kern, welche durch die Konfiguration der virtuellen Controller erzeugt wird, um DMA-Übertragungen zu überprüfen und Unterbrechungsanforderungen abzubilden. Dementsprechend ist es wünschenswert, dass die Ein-/Ausgabe MMU ohne ein Abfangen von Unterbrechungsanforderungen von dem Master-Controller auf die virtuellen Controller auskommt. Selbst wenn ein Massenspeichermedium lediglich als eine Partition benutzt wird, ist es ausreichend, dass die Ein-/Ausgabe MMU nur mit einem virtuellen Controller arbeitet. In diesem Fall ist es wünschenswert, dass dies der erste Controller ist, der eingerichtet ist für einen Zugriff auf alle Speicherbereiche des Massenspeichermediums.

Weiterhin kann es wünschenswert sein, dass das Rechnersystem für eine Priorisierung von Zugriffen eingerichtet ist. Zugriffsprioritäten sind nicht zu vernachlässigende Merkmale für komplexe Systeme wie beispielsweise bei einem Unterhaltungssystem in einem Fahrzeug. Dies liegt darin begründet, dass üblicherweise Anforderungen gegeben sind, dass die letzte Benutzereinstellung innerhalb einer kurzen Zeit von beispielsweise 1 oder 2 Millisekunden abgespeichert wird, wenn ein Spannungsabfall und ein Abschalten des Rechnersystems droht oder eingeleitet ist. Während dieser Zeit sollte es garantiert werden, dass die vorhandenen Daten auf dem Massenspeichermedium abgelegt und physikalisch gespeichert sind. Um dies zu ermöglichen, sollte das Rechnersystem in der Lage sein, ein oder mehrere Blocks auf das Massenspeichermedium kurzfristig zu schreiben, und dadurch andere Anfragen anderer virtueller Controller zu überholen beziehungsweise sogar abzubrechen. Dies kann beispielsweise dadurch implementiert werden, dass für jeden virtuellen Controller eine Priorität zugewiesen wird. Als Standard kann beispielsweise eine Identifikation des virtuellen Controllers als eine initiale Priorität verwendet werden.

In einer Weiterbildung ist es beispielsweise möglich, den virtuellen Controllern während eines Initialisierungsprozesses jeweilige Prioritäten zuzuweisen. Zusätzlich kann es möglich sein, dass der Speichercontroller CTL in einem Rundlaufverfahren (englisch: round robin) den Zugriff für virtuelle Controller mit gleicher Priorität regelt. Vorzugsweise weist der Master-Controller eine Liste auf, in der abzuarbeitende Übertragungen, also Speicher oder Lesevorgänge auf dem Massenspeichermedium, gespeichert und in eine Reihenfolge gebracht werden. Dafür kann es sinnvoll sein, dass dem Master-Controller ein spezieller Speicher oder Speicherbereiche aus vorhandenem Speicher zur Verfügung gestellt wird.

Eine weitere mögliche Eigenschaft des Rechnersystems ist die Bearbeitung von Ausnahmemeldungen, sogenannten exceptions. Vorzugsweise werden alle Ausnahmemeldungen in einen privilegierten Modus weitergeleitet. Der Master-Betriebssystem-Kern MBS sollte immer mit kompletten Privilegien gestartet werden, während die Gast-Betriebssysteme BS1, BS2, BS3 mit niedrigeren Privilegien arbeiten. Prozessoren, die die Virtualisierungen bei eingebetteten Systemen unterstützen sind unter anderem beispielsweise der ARM Cortex A15 und der Intel Atom-Prozessor. Vorzugsweise werden Unterbrechungsanforderungen, mit denen Ausnahmemeldungen wie Zugriffsverletzungen berichtet werden, unmittelbar an den Master-Betriebssystem-Kern MBS weitergeleitet, ebenso für die Ein-/Ausgabe MMU. Der Master-Betriebssystem-Kern MBS kann dann einen entsprechenden Verteidigungsmechanismus auswählen, was sich von dem Ignorieren des Ereignisses bis zu einem Anhalten oder Neustart des Gast-Betriebssystems erstrecken kann. Vorzugsweise werden solche Ausnahmemeldungen an dem Master-Betriebssystem-Kern über den Master-Controller MCTRL weitergeleitet.

In verschiedenen Ausführungsformen ist es möglich, dass eine Konfiguration des Speichercontrollers CTL auch während des Betriebs des Rechnersystems durch den Master-Betriebssystem-Kern beziehungsweise das Wirt-Betriebssystem H-OS möglich ist. Dadurch werden Software-Aktualisierungsverfahren erleichtert. So ist es beispielsweise möglich, dass die privilegierte Partition des Massenspeichermediums die installierten Programme des Wirts-Betriebssystems H-OS beziehungsweise Master-Betriebssystem-Kerns MBS und der Gast-Betriebssystem-Kerne BS1, BS2, BS3 aktualisiert. Während eines Aktualisierungsvorgangs werden die Gast-Betriebssystem-Kerne BS1, BS2, BS3 beispielsweise angehalten beziehungsweise in ihrer Ablaufkoordination angehalten, um Wettlaufsituationen, englisch: race conditions, beim Zugriff auf das Dateisystem zu vermeiden.

In Abhängigkeit der verwendeten Technologie kann es notwendig sein, dass eine Nutzungsverteilung, englisch: wear leveling, durchgeführt wird, entweder realisiert als Software oder direkt implementiert in dem angeschlossenen Massenspeichermedium. Für den Fall, dass die Nutzungsverteilung direkt durch das Massenspeichermedium ausgeführt wird, können das Wirt-Betriebssystem H-OS und die Gast-Betriebssysteme BS1, BS2, BS3 auf eine Anwendung von Nutzungsverteilung verzichten und somit nicht direkt mit den physikalischen Blocks auf dem Massenspeichermedium, insbesondere einem Flashspeicher arbeiten. Vielmehr ist es ausreichend, dass die zuvor als physikalische Blocks bezeichneten Blocks wiederum als logische beziehungsweise virtuelle Blocks dienen, die direkt vom Massenspeichermedium in die tatsächlichen physikalischen Blocks umgesetzt werden. Anders ausgedrückt wird eine zusätzliche logische Ebene von Blocks zwischen Speichercontroller CTL und Massenspeichermedium FLSH eingeführt.

Da bei der Nutzungsverteilung Blocks physikalisch verteilt auf dem Massenspeichermedium angeordnet werden, ist es notwendig, dass gewährleistet wird, dass ein Block gelöscht wird bevor er einem neuen virtuellen Block zugeordnet ist, um mögliche Sicherheitslöcher zu verhindern. Wenn das Massenspeichermedium FLSH keinen eigenen Controller für die Durchführung der Nutzungsverteilung aufweist, ist es zweckmäßig, dass der Master-Betriebssystem-Kern MBS und die kontrolliert ausgeführten Betriebssystemkerne BS1, BS2, BS3 jeweils eigene Nutzungsverteilungsalgorithmen implementiert haben, was in Figur 1 durch die mit WL und NAND bezeichneten Blöcke dargestellt ist. Insbesondere in Verbindung mit der Anwendung von Zugriffsprioritäten, welche zuvor beschrieben wurde, sind die Anforderungen an eine Nutzungsverteilung zusätzlich erhöht. Dies liegt unter anderem darin begründet, dass beispielsweise bei einem gemanagten NAND-Speicher der entsprechende Controller mit der Nutzungsverteilung beschäftigt ist, während ein virtueller Controller des Rechnersystems eine Anforderung für ein Schreiben eines Blocks mit hoher Priorität abschickt. Um in diesem Fall zu garantieren, dass beispielsweise die letzten Benutzermodusdaten geschrieben werden können, kann es notwendig sein, einen zweiten Massenspeicher mit einem unterschiedlichen Chipselect anzuschließen, so dass Transaktionen mit hoher Priorität unabhängig von internen Abläufen in dem gemanagten NAND-Speicher abgearbeitet werden können.

Ein weiterer Punkt ist ein optimierter Zugriff auf das Massenspeichermedium. Die Ein-/Ausgabebandbreite eines Zugriffs auf einen Flash-Speicher hängt im Wesentlichen von einer internen Organisation in einem Chip des Flash-Speichers ab. Beispielsweise ist ein effizienter Zugriff bei einem Hersteller dadurch implementiert, dass gerade und ungerade Blocknummern abwechselnd genutzt werden, während bei einem anderen Hersteller die erste und die zweite Hälfte von Blocknummern abwechselnd genutzt werden. Dies hängt jeweils im Wesentlichen davon ab, welche Adressen zur Auswahl einer logischen Einheit verwendet werden.

Ein auslassender Zugriff kann beispielsweise dadurch programmiert werden, dass Lese-, Schreib- oder Löschkommandos in eine Reihenfolge gebracht werden. Durch das in Reihenfolge bringen der Anforderungen in einer Weise, die am vorteilhaftesten für das verwendete Hardwaregerät ist, können Adressierungszeiten minimiert werden, wodurch sich deutlich höhere Durchsatzraten erreichen lassen.

Für ein gutes Laufzeitverhalten des Systems ist es vorteilhaft, wenn eine Optimierung von solchen Zugriffen möglich bleibt. Für einen vollen Durchsatz kann es notwendig sein, mehr als einen Adressbereich pro virtuellen Controller zu haben, insbesondere wegen der zuvor beschriebenen Auslassungsschemata für den Zugriff. Um dies zu erreichen ist es vorteilhaft, einen separaten, programmierbaren Prozessor als Speichercontroller vorzusehen, um eine Adressüberprüfung, eine Umsetzung, eine Nutzungsverteilung und einen optimierten Zugriff zu erreichen. Ein solcher Prozessor für den Speichercontroller kann auch als DMA-Master zur Übertragung von Speicher auf die zugewiesenen Speicherblöcke der Betriebssystem-Kerne MBS, BS1, BS2, BS3 zu erreichen. Ein Controller-Prozessor kann beispielsweise wiederum selbst von einem angeschlossenen Massenspeichermedium, insbesondere einem Flash-Speicher initialisiert werden.

Die Schaffung sicherer Flash-Partitionierung hängt nicht nur von der Umsetzung virtueller Controller ab. Da der Speicherzugriff auf den Flash-Speicher von dem DMA-Betrieb profitiert, kann es auch notwendig sein, die DMA-Übertragungen abzusichern. Beispielsweise geschieht dies über eine Ein-/Ausgabe MMU, welche sicherstellt, dass ein Gast-Betriebssystem BS1, BS2, BS3 oder ein virtueller Controller nur dann eine tatsächliche Speicherübertragung ausführt, wenn ausreichende Zugriffsrechte vorliegen. Im Fall einer Zugriffsverletzung kann die Ein-/Ausgabe MMU eine Ausnahmemeldung, beispielsweise eine Unterbrechungsanforderung an den Master-Betriebssystem-Kern MBS auslösen, so dass der Master-Betriebssystem-Kern MBS den Fehler durch Deaktivierung oder Neustart des Gast-Betriebssystem-Kerns behebt, welches den Fehler ausgelöst hat.

Figur 3 zeigt eine mögliche Anwendung für das zuvor beschriebene Prinzip anhand einer beispielhaften schematischen Darstellung eines Rechnersystems 100. Bei der dargestellten Ausführungsform sind auf dem Massenspeichermedium FLSH beispielhaft drei Partitionen beziehungsweise Massenspeicher MS1, MS2, MS3 eingerichtet. Auf dem Prozessor CPU läuft der Master-Betriebssystem-Kern MBS, welcher zwei separat betreibbare Betriebssystem-Kerne BS1, BS2 kontrolliert.

Der linke Betriebssystemkern BS2 dient zum Ausführen eines herkömmlichen Betriebssystems, welches die Verwendung von Internetanwendungen für einen Webbrowser, herunterladbaren Anwendungen und Multimedia-Funktionalität ermöglicht. Der Betriebssystemkern BS2 ist vorzugsweise gesichert, wobei es nicht notwendig ist, dass eine erhöhte Zuverlässigkeit bereitgestellt wird. Betriebssystemdateien, Anwendungen, Bibliotheksdateien und Konfigurationsdateien sind für den zweiten Betriebssystemkern BS2 mit dem zweiten Massenspeicher MS2 abgelegt. Dazu weist der zweite Massenspeicher MS2 beispielsweise Speicherplatz für Systemdateien BIN, ausführbare Dateien EXE und Konfigurationsdateien CNF auf. Durch den Master-Betriebssystem-Kern MBS beziehungsweise den hier nicht dargestellten Speichercontroller CTL wird sichergestellt, dass der zweite Betriebssystemkern BS2 auf den zweiten Massenspeicher MS2 lediglich einen Lesezugriff, aber keinen Schreibzugriff besitzt, gekennzeichnet durch ein RO (read only). Benutzerdaten wie Musikdateien MP3, Bilddateien JPG oder andere Internetformate HTML sind auf dem dritten Massenspeicher MS3 angelegt, auf den der zweite Betriebssystemkern BS2 sowohl Leseals auch Schreibzugriff besitzt. Dies ist durch die Bezeichnung RW (read-write) gekennzeichnet.

Der rechte Betriebssystemkern BS1 dient zur Ausführung eines sicheren Betriebssystems, unter dem ein Softwareverwaltungsprogramm läuft. Ferner können unter dem ersten Betriebssystemkern BS1 auch ein Virenscanner und/oder bestimmte Sicherheitsrichtlinien implementiert sein. Ein Zugriff auf den ersten Betriebssystemkern ist vorzugsweise lediglich zu Wartungszwecken vorgesehen, so dass insbesondere keine unsicheren Multimedia-Anwendungen oder dergleichen ausgeführt werden können. Der erste Betriebssystemkern BS1 hat Schreibzugriff und Lesezugriff auf den ersten und den zweiten Massenspeicher MS1, MS2. Auf den ersten Massenspeicher MS1 sind eine Datenbank für eine Softwareverwaltung SW-DB, Sicherheitszertifikate ZERT und ein Virenscanner VS gespeichert. Betriebssystemdateien, Anwendungen, Bibliotheksdateien und Konfigurationsdateien sind für den ersten Betriebssystemkern BS1 entweder ebenfalls auf dem zweiten Massenspeicher MS2 oder vorzugsweise auf dem ersten Massenspeicher MS1 abgelegt. Der zweite Betriebssystemkern BS2 hat keinerlei Zugriff auf den ersten Massenspeicher MS1 und hat vorzugsweise auch keine Kenntnis von der Existenz dieses Massenspeichers MS1. Der Zugriff auf das Massenspeichermedium FLSH beziehungsweise die Massenspeicher MS1, MS2, MS3 ist durch den Master-Betriebssystem-Kern MBS beziehungsweise den Speichercontroller CTL kontrolliert.

Für eine Softwareaktualisierung des zweiten Betriebssystemkerns dient dementsprechend der erste Betriebssystemkern BS1, welcher auf Basis der Datenbank für die Softwareverwaltung eine Aktualisierung der Systemdateien in Anwendungen auf dem zweiten Massenspeicher MS2 durchführt. Dazu hat der erste Betriebssystemkern BS1 über einen separaten virtuellen Controller Zugriff auf den zweiten Massenspeicher MS2. Insbesondere greifen zwei separate virtuelle Controller gleichzeitig auf den zweiten Massenspeicher MS2 zu, während der virtuelle Controller den zweiten Betriebssystemkern BS2 lediglich einen Lesezugriff zulässt, während der virtuelle Controller für den ersten Betriebssystemkern BS1 auch einen Schreibzugriff ermöglicht. Der Zugriff des zweiten Betriebssystemkerns BS2 auf den Massenspeicher des ersten Betriebssystemkerns BS1 ist aber verhindert.

Die dargestellte Ausführungsform des Rechnersystems ermöglicht es, dass selbst bei einer Kompromittierung des zweiten Betriebssystemkerns BS2 durch ein Schadprogramm die Veränderung von Systemdateien und damit die gezielte Öffnung von weiteren Sicherheitslücken ausgehend vom zweiten Betriebssystemkern BS2 verhindert werden kann. Durch die Internetfähigkeit und Multimedia-Fähigkeit des zweiten Betriebssystemkerns besteht nämlich grundsätzlich die Gefahr, dass durch unerkannte oder neu auftretende Sicherheitslücken im System Schadprogramme in den Bereich des zweiten Betriebssystemkerns eingebracht werden können, welche jedoch aufgrund der mangelnden Schreibberechtigung nicht zu einer dauerhaften Veränderung des Betriebssystems unter dem zweiten Betriebssystemkern BS2 führen können. Dies bewirkt, dass Schadprogramme nicht in dem Rechnersystem verbleiben können, wenn das System aus- und wieder eingeschaltet wird.

Das Rechnersystem 100 ist insbesondere für einen Betrieb in einem Kraftfahrzeug eingerichtet. Beispielsweise ist das Rechnersystem 100 als eingebettetes System ausgeführt. Jedoch kann das Rechnersystem 100 auch in anderen Umgebungen, wie z.B. bei Mobiltelefonen, die beispielsweise mit dem Android-Betriebssystem betrieben werden, eingesetzt werden.

## Patentansprüche

1. Rechnersystem (100) mit wenigstens einem Prozessor (CPU) und einem Speichercontroller (CTL) für ein nichtflüchtiges Massenspeichermedium (FLSH), wobei
- das Rechnersystem eingerichtet ist, auf dem Prozessor (CPU) einen Master-Betriebssystem-Kern (MBS) sowie einen ersten und wenigstens einen zweiten Betriebssystemkern (BS1, BS2) unter Kontrolle des Master-Betriebssystem-Kerns (MBS) auszuführen;
- der Speichercontroller (CTL) eingerichtet ist, dem Master-Betriebssystem-Kern (MBS) definierte Bereiche eines Massenspeichermediums (FLSH) als einen ersten und wenigstens einen zweiten Massenspeicher zur Verfügung zu stellen, die jeweils voneinander unabhängig sind, und eine Abbildung des ersten und des wenigstens einen zweiten Massenspeichers auf die definierten Bereiche des Massenspeichermediums (FLSH) zu steuern und
- der Master-Betriebssystem-Kern (MBS) eingerichtet ist, dem ersten und dem wenigstens einen zweiten Betriebssystemkern (BS1, BS2) exklusiven Zugriff auf jeweils zumindest einen der zur Verfügung gestellten Massenspeicher zu ermöglichen;- bei dem der Speichercontroller (CTL) einen ersten und wenigstens einen zweiten virtuellen Controller (VC1, VC2, ..., VCn) aufweist, die jeweils einen der Massenspeicher zur Verfügung stellen und jeweils ein Register aufweisen, das in einen Speicherbereich des Master-Betriebssystem-Kerns (MBS) abgebildet ist, **dadurch gekennzeichnet, dass**
- für jeden virtuellen Controller (VC1, VC2, ..., VCn)eine Zugriffspriorität zugewiesen wird, so dass ein oder mehrere Blocks auf das Massenspeichermedium (FLSH) kurzfristig beschreibbar sind, um anderer Anfragen anderer virtueller Controller zu überholen oder abzubrechen.

2. Rechnersystem (100) nach Anspruch 1, bei dem der Speichercontroller (CTL) eine Abbildungstabelle (MTBL) aufweist, in der für jeden zur Verfügung gestellten Massenspeicher eine Abbildungsvorschrift auf die zugehörigen definierten Bereiche des Massenspeichermediums (FLSH) gespeichert ist.

3. Rechnersystem (100) nach Anspruch 2, bei dem die definierten Bereiche des Massenspeichermediums (FLSH) durch Partitionen auf dem Massenspeichermedium (FLSH) gebildet sind, und bei dem die gespeicherten Abbildungsvorschriften Informationen über eine Position und Größe der Partitionen umfassen.

4. Rechnersystem (100) nach Anspruch 2 oder 3, bei dem die gespeicherten Abbildungsvorschriften Informationen über eine Hardware-Identifikationsnummer der Massenspeicher umfassen.

5. Rechnersystem (100) nach einem der Ansprüche 1 bis 4, bei dem der Speichercontroller (CTL) einen Master-Controller (MCTRL) aufweist, der eingerichtet ist, einen Hardwarezugriff auf die definierten Bereiche zu steuern.

6. Rechnersystem (100) nach Anspruch 5, bei dem der Master-Controller (MCTRL) eingerichtet ist, eine jeweilige Zugriffsberechtigung auf die definierten Bereiche zu prüfen.

7. Rechnersystem (100) nach einem der Ansprüche 1 bis 6, bei dem der Speichercontroller (CTL) eingerichtet ist, einen Zugriff auf die definierten Bereiche des Massenspeichermediums (FLSH) anhand vorgegebener Prioritäten zu steuern.

8. Rechnersystem (100) nach einem der Ansprüche 1 bis 7, bei dem der Speichercontroller (CTL) eingerichtet ist, eine Nutzungsverteilung des Massenspeichermediums (FLSH) zu steuern.

9. Rechnersystem (100) nach einem der Ansprüche 1 bis 8, ferner umfassend das Massenspeichermedium (FLSH).

## Claims

1. Computer system (100) comprising at least one processor (CPU) and one memory controller (CTL) for a non-volatile mass storage medium (FLSH), wherein
- the computer system is configured to execute on the processor (CPU) a master operating system core (MBS) and a first and at least one second operating system core (BS1, BS2) under the control of the master operating system core (MBS);
- the memory controller (CTL) is configured to provide the master operating system core (MBS) with defined areas of a mass storage medium (FLSH) as a first and at least one second mass memory which are in each case independent of one another, and to control a mapping of the first and of the at least one second mass memory to the defined areas of the mass storage medium (FLSH), and
- the master operating system core (MBS) is configured to provide the first and the at least one second operating system core (BS1, BS2) with exclusive access to in each case at least one of the mass memories provided;
- in which the memory controller (CTL) has a first and at least one second virtual controller (VC1, VC2, ..., VCn) which in each case provide one of the mass memories and in each case have a register which is mapped into a memory area of the master operating system core (MBS), **characterized in that**
- an access priority is allocated for each virtual controller (VC1, VC2, ..., VCn), with the result that one or more blocks can be written in the short term to the mass storage medium (FLSH) in order to bypass or terminate other requests of other virtual controllers.

2. Computer system (100) according to Claim 1, in which the memory controller (CTL) has a mapping table (MTBL) in which a mapping rule to the associated defined areas of the mass storage medium (FLSH) is stored for each mass memory provided.

3. Computer system (100) according to Claim 2, in which the defined areas of the mass storage medium (FLSH) are formed by partitions on the mass storage medium (FLSH), and in which the stored mapping rules comprise information on a position and size of the partitions.

4. Computer system (100) according to Claim 2 or 3, in which the stored mapping rules comprise information on a hardware identification number of the mass memories.

5. Computer system (100) according to one of Claims 1 to 4, in which the memory controller (CTL) has a master controller (MCTRL) which is configured to control hardware access to the defined areas.

6. Computer system (100) according to Claim 5, in which the master controller (MCTRL) is configured to check a respective access authorization to the defined areas.

7. Computer system (100) according to one of Claims 1 to 6, in which the memory controller (CTL) is configured to control access to the defined areas of the mass storage medium (FLSH) by means of predetermined priorities.

8. Computer system (100) according to one of Claims 1 to 7, in which the memory controller (CTL) is configured to control a usage distribution of the mass storage medium (FLSH).

9. Computer system (100) according to one of Claims 1 to 8, furthermore comprising the mass storage medium (FLSH).

## Revendications

1. Système informatique (100), comprenant au moins un processeur (CPU) et un contrôleur de mémoire (CTL) pour un support de mémoire de masse non volatile (FLSH)
- le système informatique étant conçu pour exécuter sur le processeur (CPU) un noyau de système d'exploitation maître (MBS) ainsi qu'un premier et au moins un deuxième noyau de système d'exploitation (BS1, BS2) sous le contrôle du noyau de système d'exploitation maître (MBS) ;
- le contrôleur de mémoire (CTL) étant conçu pour mettre à disposition du noyau de système d'exploitation maître (MBS) des secteurs définis d'un support de mémoire de masse (FLSH) sous la forme d'une première et d'au moins une deuxième mémoire de masse qui sont indépendantes l'une de l'autre respectivement, et pour commander un mappage de la première et de ladite au moins une deuxième mémoire de masse sur les secteurs définis du support de mémoire de masse (FLSH) ; et
- le noyau de système d'exploitation maître (MBS) étant conçu pour permettre au premier et audit au moins un deuxième noyau de système d'exploitation (BS1, BS2) un accès exclusif à au moins l'une des mémoires de masse mises à disposition respectivement ;
- le contrôleur de mémoire (CTL) présentant un premier et au moins un deuxième contrôleur virtuel (VC1, VC2, ..., VCn) qui mettent à disposition l'une des mémoires de masse respectivement et présentent un registre respectivement qui est mappé sur un secteur de mémoire du noyau de système d'exploitation maître (MBS),
**caractérisé en ce que**
- chaque contrôleur virtuel (VC1, VC2, ..., VCn) se voit attribuer une priorité d'accès de sorte qu'un ou plusieurs blocs sont inscriptibles à court terme sur le support de mémoire de masse (FLSH) afin de dépasser ou d'abandonner d'autres demandes provenant d'autres contrôleurs virtuels.

2. Système informatique (100) selon la revendication 1, dans lequel le contrôleur de mémoire (CTL) présente une table de mappage (MTBL) dans laquelle une règle de mappage sur les secteurs définis associés du support de mémoire de masse (FLSH) est stockée pour chaque mémoire de masse mise à disposition.

3. Système informatique (100) selon la revendication 2, dans lequel les secteurs définis du support de mémoire de masse (FLSH) sont formés par des partitions sur le support de mémoire de masse (FLSH), et dans lequel les règles de mappage stockées comprennent des informations concernant une position et une taille des partitions.

4. Système informatique (100) selon la revendication 2 ou 3, dans lequel les règles de mappage stockées comprennent des informations concernant un numéro d'identification de matériel de la mémoire de masse.

5. Système informatique (100) selon l'une quelconque des revendications 1 à 4, dans lequel le contrôleur de mémoire (CTL) présente un contrôleur maître (MCTRL) qui est conçu pour commander un accès matériel aux secteurs définis.

6. Système informatique (100) selon la revendication 5, dans lequel le contrôleur maître (MCTRL) est conçu pour vérifier une autorisation respective d'accéder aux secteurs définis.

7. Système informatique (100) selon l'une quelconque des revendications 1 à 6, dans lequel le contrôleur de mémoire (CTL) est conçu pour commander l'accès aux secteurs définis du support de mémoire de masse (FLSH) à l'aide de priorités prédéfinies.

8. Système informatique (100) selon l'une quelconque des revendications 1 à 7, dans lequel le contrôleur de mémoire (CTL) est conçu pour commander une distribution d'exploitation du support de mémoire de masse (FLSH).

9. Système informatique (100) selon l'une quelconque des revendications 1 à 8, comprenant en outre le support de mémoire de masse (FLSH).
